# EUROPÄISCHE PATENTSCHRIFT

(11) **EP 2 098 417 B1**
(45) Veröffentlichungstag und Bekanntmachung des Hinweises auf die Patenterteilung: **13.04.2011**
(21) Anmeldenummer: 09075081.1
(22) Anmeldetag: 20.02.2009
(51) Int. Cl.: B60R 22/24

(54) **Gurtumlenkvorrichtung**
Belt guide
Renvoi de sangle

(30) Priorität: 06.03.2008 DE 102008012951
(43) Veröffentlichungstag der Anmeldung: 09.09.2009
(73) Patentinhaber: Takata-Petri AG, 63743 Aschaffenburg (DE)
(72) Erfinder: Ruge, Vadim, 89077 Ulm (DE)
(74) Vertreter: Fischer, Uwe

(56) Entgegenhaltungen:
- DE-A1- 2 817 741
- DE-A1- 10 346 172
- US-A1- 2003 062 714

## Beschreibung

Die Erfindung bezieht sich auf eine Anordnung mit einer Fahrzeugsäule (z. B. A-, B- oder C-Säule) und einer daran befestigten Gurtumlenkvorrichtung für einen Sicherheitsgurt zum Schutz eines Fahrzeuginsassen mit einem Umlenkglied, das den Sicherheitsgurt umlenkt, und mit einem Ablenkglied, das den Sicherheitsgurt in Richtung des Fahrzeuginsassen ablenkt.

Gurtumlenkvorrichtungen sind beispielsweise aus den deutschen Offenlegungsschriften DE 103 46 172 und DE 199 15 024 bekannt. Sie weisen ein Umlenkglied auf, das den Sicherheitsgurt umlenkt, sowie ein Ablenkglied, das den Sicherheitsgurt in Richtung des Fahrzeuginsassen ablenkt. Die vorbekannten Gurtumlenkvorrichtungen sind als separate Komponenten ausgebildet und an der Innenseite der an den Fahrzeuginnenraum angrenzenden Fahrzeugsäulenwand der Fahrzeugsäule angebracht.

Darüber hinaus sind Anordnungen bekannt, bei denen der Sicherheitsgurt von einem Gurtaufroller kommend - vom Innenraum betrachtet - komplett hinter der an den Fahrzeuginnenraum angrenzenden Fahrzeugsäulenwand - also auf der dem Fahrzeuginnenraum abgewandten Außenseite der an den Fahrzeuginnenraum angrenzenden Fahrzeugsäulenwand der Fahrzeugsäule - verläuft und erst nach einem Umlenken durch ein oberes Umlenkglied in den Fahrzeuginnenraum gelenkt wird.

Weitere Gurtumlenkvorrichtungen sind aus den Offenlegungsschriften US 2003/0062714 A1 und DE 28 17 741 bekannt. Erfindungsgemäß ist vorgesehen, dass eine innere oder eine unmittelbar an den Fahrzeuginnenraum angrenzende Fahrzeugsäulenwand der Fahrzeugsäule eine Öffnung aufweist, in die die Gurtumlenkvorrichtung derart eingesetzt ist, dass das Umlenkglied auf der dem Fahrzeuginnenraum abgewandten Außenseite der Fahrzeugsäulenwand liegt, der Sicherheitsgurt von dem Fahrzeuginnenraum durch die Öffnung hindurch auf die Außenseite der Fahrzeugsäulenwand zu dem Umlenkglied und von diesem zu dem Ablenkglied geführt wird, und das Ablenkglied den Sicherheitsgurt durch dieselbe Öffnung hindurch wieder in den Fahrzeuginnenraum führt und dabei den Sicherheitsgurt in Richtung Fahrzeuginsassen ablenkt.

Ein erster wesentlicher Vorteil der erfindungsgemäßen Anordnung ist darin zu sehen, dass durch die Integration der Gurtumlenkvorrichtung in die Fahrzeugsäule die Verwendung dünnerer Bleche für den Umlenkrahmen der Gurtumlenkvorrichtung ermöglicht wird, was bei gleich bleibender oder sogar besserer Festigkeit der Gurtumlenkvorrichtung zu einer Gewichts- und Kostenreduktion führt.

Ein zweiter wesentlicher Vorteil der erfindungsgemäßen Anordnung ist darin zu sehen, dass aufgrund der Integration ein kleinerer Bauraum und somit ein größerer Fahrzeuginnenraum ermöglicht wird als bei Gurtumlenkvorrichtungen, die auf der Innenseite der Fahrzeugsäulenwand montiert werden und demgemäß auch im Fahrzeuginnenraum Platz beanspruchen.

Ein dritter wesentlicher Vorteil der erfindungsgemäßen Anordnung besteht darin, dass der Kopfaufprallschutz für den Fahrzeuginsassen besser ist als bei Gurtumlenkvorrichtungen, die auf der Innenseite der Fahrzeugsäulenwand montiert werden und demgemäß in den Fahrzeuginnenraum hineinragen.

Ein vierter wesentlicher Vorteil der erfindungsgemäßen Anordnung ist darin zu sehen, dass diese sehr viel einfacher montiert werden kann als beispielsweise bei den bereits oben erwähnten Anordnungen, bei denen der Sicherheitsgurt - vom Innenraum betrachtet - komplett hinter der Fahrzeugsäulenwand geführt wird.

Vorzugsweise ist das Umlenkglied oberhalb der Öffnung der Fahrzeugsäulenwand angeordnet, und das Umlenken des Sicherheitsgurtes erfolgt vorzugsweise auf der Außenseite der Fahrzeugsäulenwand oberhalb der Öffnung.

Die Öffnung der Fahrzeugsäulenwand und die Gurtumlenkvorrichtung sind bevorzugt derart angeordnet, dass der Sicherheitsgurt von unterhalb der Öffnung kommend durch die Öffnung hindurch tritt und oberhalb der Öffnung auf die Außenseite der Fahrzeugsäulenwand und zu dem Umlenkglied gelangt, von dort durch das Umlenkglied entlang der Längsrichtung der Fahrzeugsäulenwand nach unten umgelenkt wird und zu dem oberen Rand der Öffnung gelangt und am oberen Rand der Öffnung in den Fahrzeuginnenraum abgelenkt wird.

Das Ablenkglied umgreift bevorzugt den oberen Rand der Öffnung. Das Ablenkglied ist vorzugsweise durch eine rinnenförmige Ablenkrinne gebildet, die den oberen Rand der Öffnung der Fahrzeugsäulenwand von der Außenseite der Fahrzeugsäulenwand kommend umgreift. Durch dieses Umgreifen wird ein Formschluss ermögliclit, mit dem die Gurtumlenkvorrichtung an dem schluss ermöglicht, mit dem die Gurtumlenkvorrichtung an dem genannten Rand, beispielsweise dem oberen Rand der Öffnung befestigt werden kann, so dass es beispielsweise möglich ist, die Gurtumlenkvorrichtung allein mit einem einzigen zusätzlichen Befestigungselement, wie beispielsweise einer Schraube oder dergleichen, an der Fahrzeugsäulenwand zu befestigen.

Die Ablenkrinne ist außerdem bevorzugt derart ausgestaltet, dass sie den Sicherheitsgurt von dem oberen Rand der Öffnung der Fahrzeugsäulenwand trennt. Bei dieser Ausgestaltung übt die Ablenkrinne eine Doppelfunktion aus: Zum einen ermöglicht sie den genannten Formschluss für die Befestigung der Gurtumlenkvorrichtung und zum anderen schützt sie den Sicherheitsgurt vor einem Kontakt mit der Öffnung, die in der Regel durch ein Blech der Fahrzeugsäulenwand gebildet sein wird und somit scharfkantig sein kann. Die Ablenkrinne ist vorzugsweise im Querschnitt u-förmig.

Um einen besonders guten Halt der Gurtumlenkvorrichtung zu ermöglichen, ein Klappern der Gurtumlenkvorrichtung zu vermeiden und eine exakte Positionierung der Gurtumlenkvorrichtung zu ermöglichen, wird es als vorteilhaft angesehen, wenn der obere Rand der Öffnung der Fahrzeugsäulenwand in Richtung Fahrzeuginnenraum oder in entgegengesetzter Richtung umgebogen ist.

Die Fahrzeugsäulenwand weist im Bereich unterhalb der Öffnung vorzugsweise eine Vertiefung, insbesondere eine rampenförmige Vertiefung, auf, die den Sicherheitsgurt in Richtung Öffnung führt. Bevorzugt wird die Vertiefung in Richtung Öffnung tiefer.

Der obere Rand der Öffnung der Fahrzeugsäulenwand und das Ablenkglied verlaufen bevorzugt schräg zur Horizontalen, um den Sicherheitsgurt in Richtung Fahrzeuginsassen abzulenken.

Die Gurtumlenkvorrichtung weist vorzugsweise eine Befestigungsstelle, die beispielsweise durch ein Loch in der Gurtumlenkvorrichtung oder ein Gewinde (z. B. Mutter, Gewindebolzen) gebildet sein kann, auf, die mit einem Befestigungsmittel verbunden ist, das vom Fahrzeuginneren durch ein oberhalb der Öffnung befindliches Loch in der Fahrzeugsäulenwand hindurch geführt ist und die Gurtumlenkvorrichtung auf der Außenseite der Fahrzeugsäulenwand oberhalb der Öffnung befestigt. Ist die Befestigungsstelle durch ein Loch in der Gurtumlenkvorrichtung gebildet, so kann eine Befestigung beispielsweise durch eine Schraube oder ein sonstiges Befestigungsmittel erfolgen, das durch das Loch in der Fahrzeugsäulenwand und das Loch in der Gurtumlenkvorrichtung hindurchgeführt ist und in der jeweils nächstliegenden inneren Fahrzeugsäulenwand oder einen anderen Fahrzeugsäulenwand der Fahrzeugsäule oder der vom Fahrzeuginnenraum aus gesehen äußersten Fahrzeugsäulenwand der Fahrzeugsäule gehalten (zum Beispiel verschraubt) ist.

Auch kann die Gurtumlenkvorrichtung als Befestigungsstelle einen Bolzen (z. B. Einpressbolzen) aufweisen, der durch das Loch in der Fahrzeugsäulenwand oder den Löchern in den Fahrzeugsäulenwänden in Richtung Fahrzeuginnenraum durchgesteckt ist und vom Fahrzeuginnenraum aus fixiert, zum Beispiel verschraubt, wird.

Zur Erläuterung der Erfindung ist in den Figuren ein Ausführungsbeispiel der Erfindung näher dargestellt; dabei zeigen beispielhaft
- Figuren 1-5 und 7: ein Ausführungsbeispiel für eine Gurt- umlenkvorrichtung und
- Figuren 6 und 8-12: dieselbe Gurtumlenkvorrichtung im ein- gebauten Zustand mit einer Fahrzeugsäu- lenwand.

In den Figuren werden der Übersicht halber für identische oder vergleichbare Teile stets dieselben Bezugszeichen verwendet.

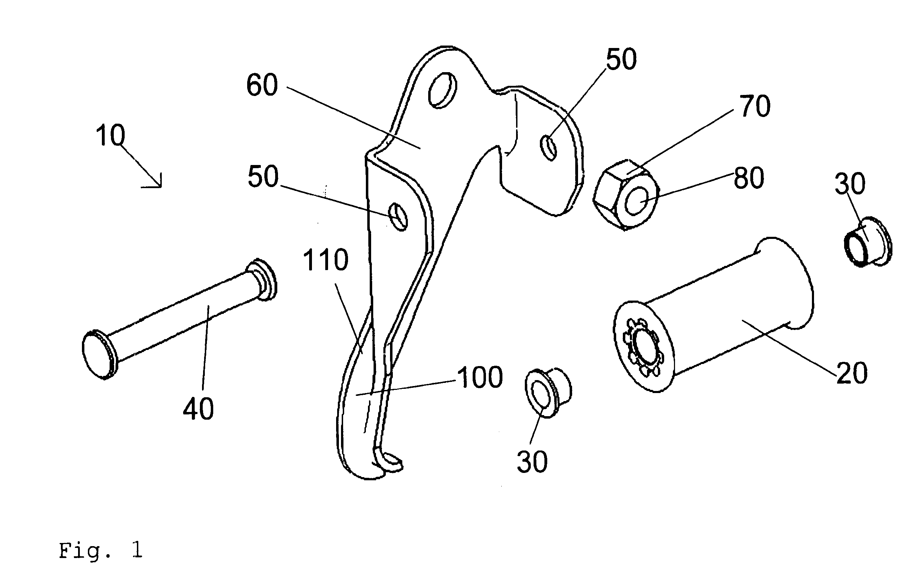

In der Figur 1 ist ein Ausführungsbeispiel für eine Gurtumlenkvorrichtung 10 in einer Explosionsdarstellung gezeigt.

Die Gurtumlenkvorrichtung 10 dient zum Umlenken eines in der Figur 1 nicht gezeigten Sicherheitsgurts zum Schutz eines Fahrzeuginsassen.

Die Gurtumlenkvorrichtung 10 weist ein oberes Umlenkglied 20 auf, das beispielsweise durch eine Umlenkstange oder eine drehbare Umlenkrolle gebildet sein kann. Bei dem Ausführungsbeispiel gemäß der Figur 1 handelt es sich bei dem Umlenkglied 20 um eine Umlenkrolle, die mittels zweier Lagerelemente 30 und einer Achse 40 in Lageröffnungen 50 eines Rahmens 60 der Gurtumlenkvorrichtung 10 drehbar gehalten wird.

In dem Rahmen 60 ist außerdem eine obere Befestigungsstelle 70 vorgesehen, die beispielsweise ein Gewinde 80 aufweisen kann. Das Gewinde 80 kann beispielsweise durch einen Gewindestift, eine angeschweißte oder angeklebte Mutter oder dergleichen gebildet sein.

Die Gurtumlenkvorrichtung 10 weist außerdem ein unteres Ablenkglied 100 auf, das vorzugsweise durch eine Ablenkrinne 110 gebildet ist; das untere Ablenkglied 100 bzw. die Ablenkrinne 110 sind vorzugsweise einteilig mit dem Rahmen 60 verbunden bzw. Bestandteil des Rahmens 60.

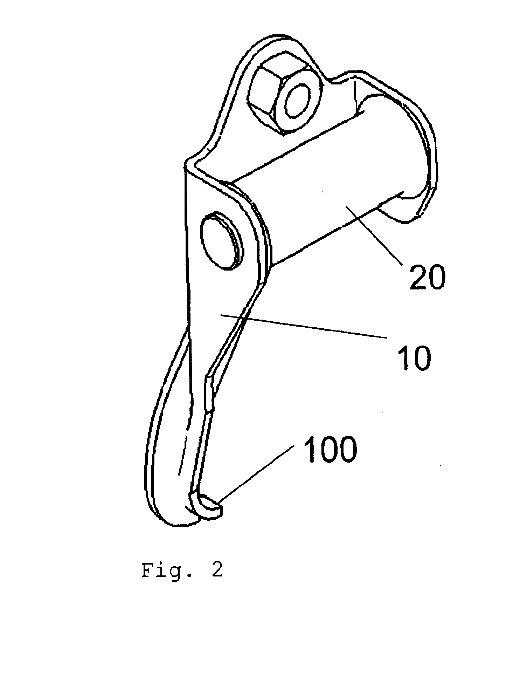

Die Figur 2 zeigt die Gurtumlenkvorrichtung 10 gemäß Figur 1 im zusammengesetzten Zustand.

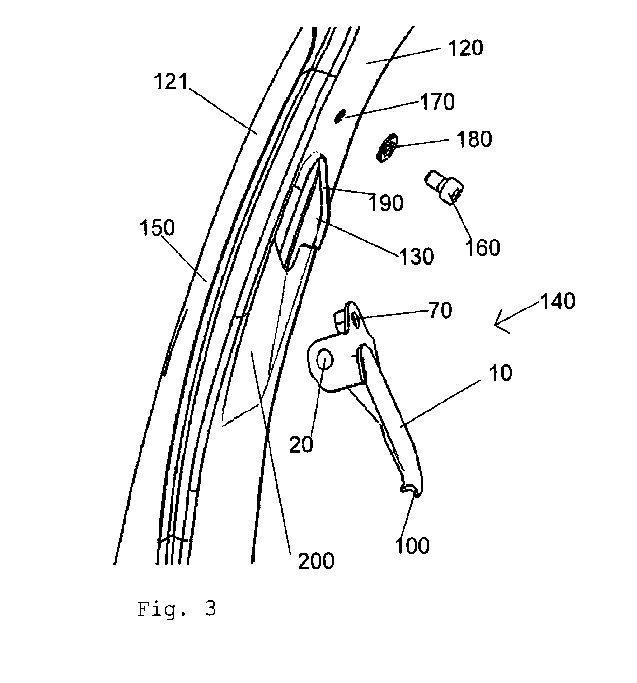

In der Figur 3 erkennt man die Gurtumlenkvorrichtung 10 vor dem Einbau in einer Fahrzeugsäulenwand 120 einer Fahrzeugsäule 121. Die Fahrzeugsäulenwand 120 ist mit einer Öffnung 130 versehen, in die die Gurtumlenkvorrichtung 10 von dem Fahrzeuginnenraum 140 kommend zwecks Montage an der Fahrzeugsäulenwand 120 eingesetzt werden kann. Bei dem Ausführungsbeispiel gemäß der Figur 3 handelt es sich bei der Fahrzeugsäulenwand 120 um eine unmittelbar an den Fahrzeuginnenraum angrenzende Fahrzeugsäulenwand; stattdessen kann es sich aber auch um eine innere Fahrzeugsäulenwand der Fahrzeugsäule handeln, falls diese eine oder mehrere innere Fahrzeugsäulenwände aufweist.

Die Gurtumlenkvorrichtung 10 wird - nachdem der in der Figur 3 der Übersicht halber nicht dargestellte Sicherheitsgurt an der Gurtumlenkvorrichtung angebracht ist - derart eingesetzt, dass die Befestigungsstelle 70 und das obere Umlenkglied 20 hinter der Fahrzeugsäulenwand 120 befestigt werden, also auf der dem Fahrzeuginnenraum 140 abgewandten Außenseite 150 der Fahrzeugsäulenwand 120.

Zum Befestigen der Gurtumlenkvorrichtung 10 wird ein Befestigungsmittel 160, bei dem es sich beispielsweise um eine Schraube, eine Gewindestange oder dergleichen handeln kann, durch ein Loch 170 der Fahrzeugsäulenwand 120 hindurchgeführt und mit der Befestigungsstelle 70 der Gurtumlenkvorrichtung 10 verbunden. Zur weiteren Befestigung kann auch noch eine Unterlegscheibe 180 verwendet werden, die der Festigkeit dient, jedoch kann auf eine solche Unterlegscheibe 180 auch verzichtet werden.

In der Figur 3 erkennt man außerdem, dass der obere Rand 190 der Öffnung 130 in Richtung Fahrzeuginnenraum 140 umgebogen ist, beispielsweise zumindest im Wesentlichen senkrecht zur Fahrzeugsäulenwand 120.

Nach dem Einsetzen der Gurtumlenkvorrichtung 10 mit dem Sicherheitsgurt in die Öffnung 130 der Fahrzeugsäulenwand 120 wird das Ablenkglied 100 den oberen Rand 190 umgreifen und einen Formschluss herbeiführen, so dass die Gurtumlenkvorrichtung 10 unten durch das Ablenkglied 100 an der Fahrzeugsäulenwand 120 gehalten wird. Durch diesen Formschluss wird es in vorteilhafter Weise ermöglicht, die Gurtumlenkvorrichtung 10 allein mit dem Befestigungsmittel 160 und der Befestigungsstelle 70 an der Fahrzeugsäulenwand 120 zu halten.

Der obere Rand 190 kann durch ein weiteres Blech oder dergleichen verstärkt werden; dies ist jedoch fakultativ und in den Figuren nicht dargestellt. Im Falle einer solchen Verstärkung kann beispielsweise auf ein Umbiegen des oberen Randes 190 verzichtet werden.

In der Figur 3 sieht man außerdem, dass die Fahrzeugsäulenwand 120 im Bereich unterhalb der Öffnung 130 eine rampenförmige Vertiefung 200 aufweist, die in Richtung Öffnung 130 tiefer wird und den Sicherheitsgurt in Richtung Öffnung 130 führt.

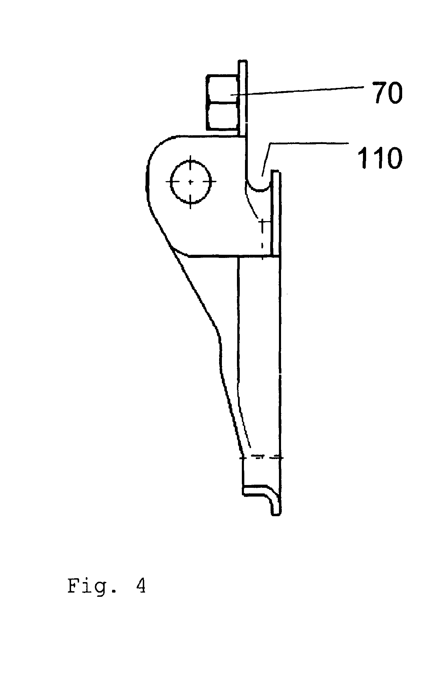

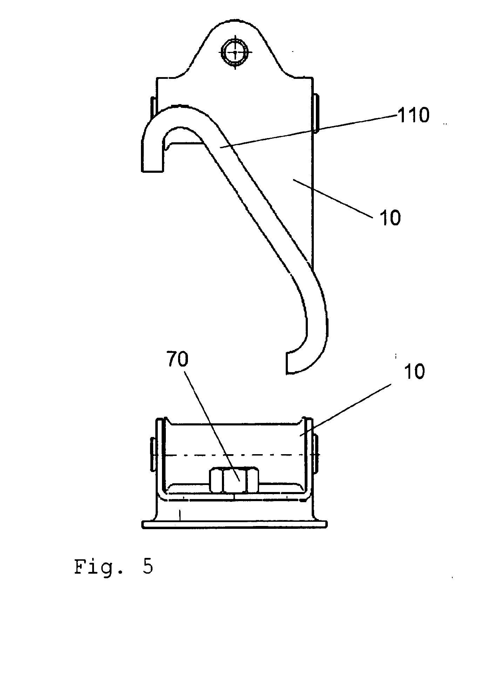

In den Figuren 4 und 5 sieht man die Gurtumlenkvorrichtung 10 in verschiedenen Perspektiven, und zwar in der Figur 4 von der Seite, von welcher man die Befestigungsstelle 70 sowie die Ablenkrinne 110 erkennt, und in Figur 5 von vorne bzw. oben, wobei man die Befestigungsstelle 70 erkennt.

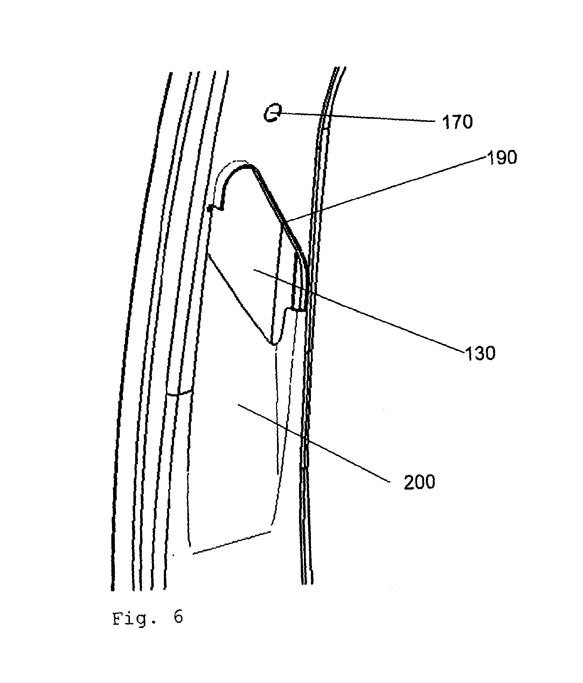

Figur 6 zeigt die rampenförmige Vertiefung 200 mit der Öffnung 130, den oberen Rand 190, der in Richtung des Fahrzeuginnenraumes 140 umgebogen ist, sowie das Loch 170, durch das das Befestigungsmittel 160 hindurchgeführt ist.

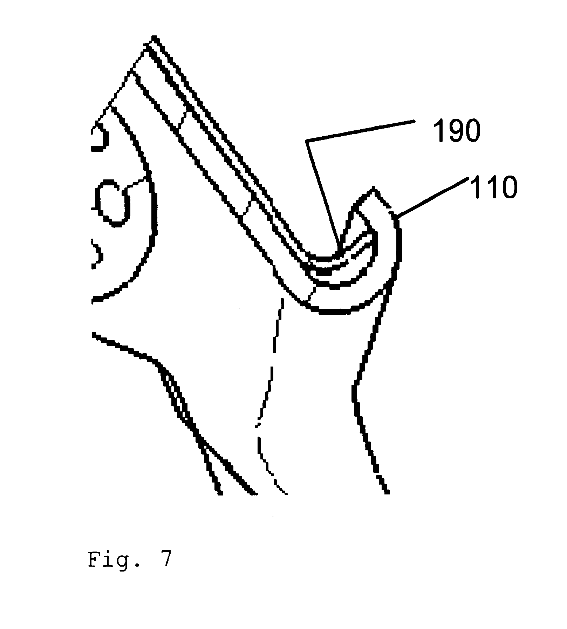

Die Figur 7 zeigt die Gurtumlenkvorrichtung 10 mit Fokus auf den oberen Rand 190 und die Ablenkrinne 110, welche dafür sorgt, dass der Sicherheitsgurt 300 nicht durch den oberen Rand 190 der Öffnung 130 beschädigt wird.

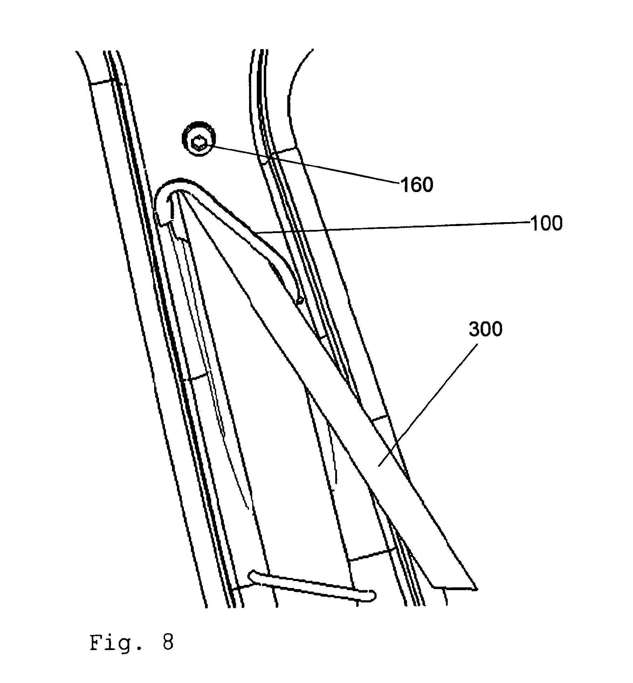

Figur 8 zeigt die Gurtumlenkvorrichtung 10 in der in die Fahrzeugsäulenwand 120 eingebauten Position, wobei die Gurtumlenkvorrichtung durch das durch das Loch 170 hindurch geführte Befestigungsmittel 160 befestigt ist und das Ablenkglied 100 den Sicherheitsgurt 300 in den Fahrzeuginnenraum 140 führt.

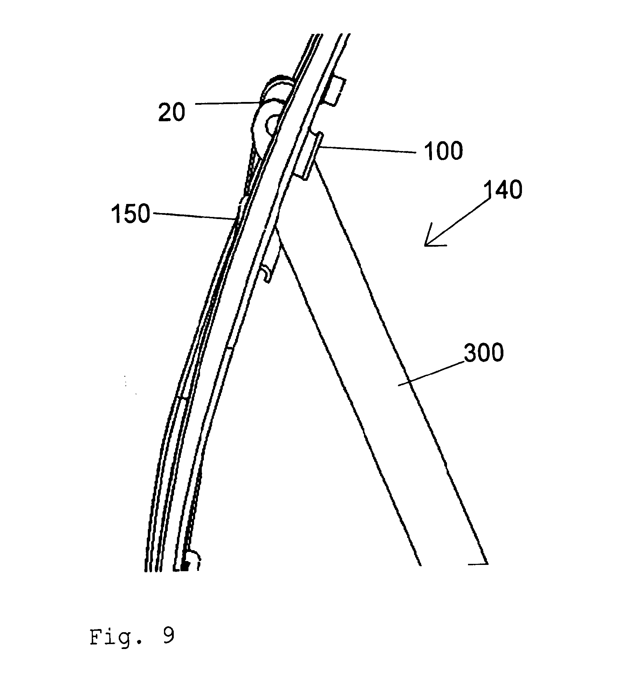

Auch in Figur 9 ist die Gurtumlenkvorrichtung 10 in der Fahrzeugsäulenwand 120 eingebaut dargestellt, wobei die Funktion des Ablenkgliedes 100, welches den Sicherheitsgurt 300 in den Fahrzeuginnenraum 140 führt, erkennbar wird.

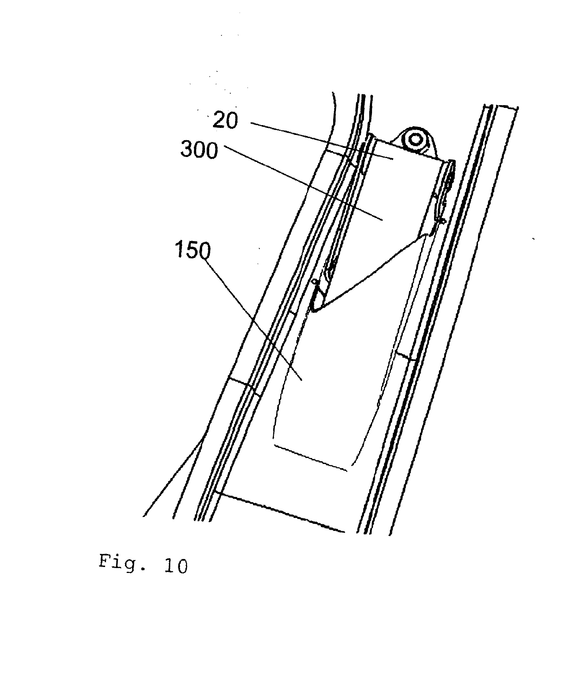

Figur 10 zeigt die Gurtumlenkvorrichtung 10 in Einbaulage von der Außenseite der Fahrzeugsäulenwand 150 her, wobei die Führung des Sicherheitsgurtes 300 über das Umlenkglied 20 sichtbar wird.

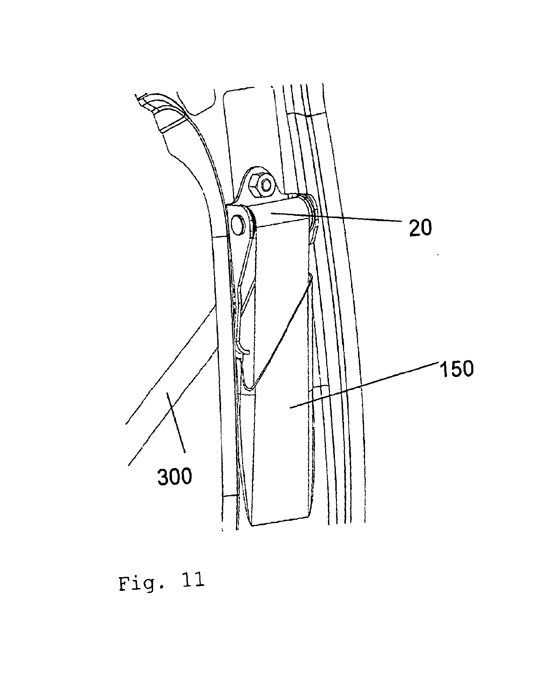

Auch Figur 11 zeigt die Gurtumlenkvorrichtung 10 in Einbaulage von der Außenseite 150 der Fahrzeugsäulenwand 120 her, allerdings seitlich versetzt, so dass die Führung des Sicherheitsgurtes 300 über das Umlenkglied 20 in den Fahrzeuginnenraum 140 sichtbar wird.

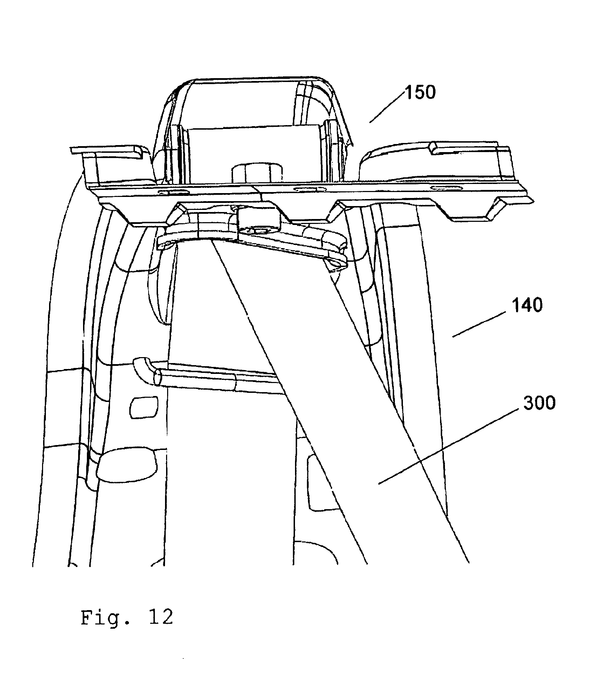

Schließlich zeigt Figur 12 die Gurtumlenkvorrichtung 10 in Einbaulage mit der Führung des Sicherheitsgurtes 300 von oben her gesehen.

### Bezugszeichenliste

- 10: Gurtumlenkvorrichtung
- 20: Umlenkglied
- 30: Lagerelemente
- 40: Achse
- 50: Lageröffnungen
- 60: Rahmen
- 70: obere Befestigungsstelle
- 80: Gewinde
- 100: Ablenkglied
- 110: Ablenkrinne
- 120: Fahrzeugsäulenwand
- 121: Fahrzeugsäule
- 130: Öffnung
- 140: Fahrzeuginnenraum
- 150: Außenseite der Fahrzeugsäulenwand
- 160: Befestigungsmittel
- 170: Loch
- 180: Unterlegscheibe
- 190: obere Rand der Öffnung
- 200: Vertiefung
- 300: Sicherheitsgurt

## Patentansprüche

1. Anordnung mit einer Fahrzeugsäule (120) und mit einer Gurtumlenkvorrichtung (10) für einen Sicherheitsgurt (300)
- mit einem Umlenkglied (30), das den Sicherheitsgurt umlenkt, und
- mit einem Ablenkglied (40), das den Sicherheitsgurt in Richtung des Fahrzeuginsassen ablenkt,
**dadurch gekennzeichnet,**
- **dass** eine innere oder eine unmittelbar an den Fahrzeuginnenraum angrenzende Fahrzeugsäulenwand der Fahrzeugsäule (120) eine Öffnung (130) aufweist, in die die Gurtumlenkvorrichtung derart eingesetzt ist, dass das Umlenkglied (20) auf der dem Fahrzeuginnenraum (140) abgewandten Außenseite (150) der Fahrzeugsäulenwand liegt,
- **dass** der Sicherheitsgurt (300) von dem Fahrzeuginnenraum durch die Öffnung hindurch auf die Außenseite der Fahrzeugsäulenwand zu dem Umlenkglied und von diesem zu dem Ablenkglied geführt wird, und
- **dass** das Ablenkglied den Sicherheitsgurt durch dieselbe Öffnung hindurch wieder in den Fahrzeuginnenraum führt und dabei den Sicherheitsgurt in Richtung Fahrzeuginsassen ablenkt.

2. Anordnung nach Anspruch 1,
**dadurch gekennzeichnet, dass**
das Umlenkglied oberhalb der Öffnung der Fahrzeugsäulenwand angeordnet ist und das Umlenken des Sicherheitsgurtes auf der Außenseite der Fahrzeugsäulenwand oberhalb der Öffnung erfolgt.

3. Anordnung nach Anspruch 1 oder 2,
**dadurch gekennzeichnet, dass**
die Öffnung der Fahrzeugsäulenwand und die Gurtumlenkvorrichtung derart angeordnet sind, dass der Sicherheitsgurt von unterhalb der Öffnung kommend durch die Öffnung durchtritt und nach oben oberhalb der Öffnung auf die Außenseite der Fahrzeugsäulenwand gelangt, von dort durch das Umlenkglied entlang der Längsrichtung der Fahrzeugsäulenwand nach unten umgelenkt wird und zu dem oberen Rand (190) der Öffnung gelangt und im Bereich des oberen Randes der Öffnung in den Fahrzeuginnenraum abgelenkt wird.

4. Anordnung nach einem der voranstehenden Ansprüche, **dadurch gekennzeichnet, dass**
das Ablenkglied (100) einen oberen Rand (190) der Öffnung der Fahrzeugsäulenwand umgreift.

5. Anordnung nach einem der voranstehenden Ansprüche, **dadurch gekennzeichnet, dass**
das Ablenkglied durch eine rinnenförmige Ablenkrinne (110) gebildet ist, die den oberen Rand (190) der Öffnung (130) der Fahrzeugsäulenwand von der Außenseite der Fahrzeugsäulenwand kommend umgreift.

6. Anordnung nach Anspruch 5,
**dadurch gekennzeichnet, dass**
die Ablenkrinne derart ausgestaltet ist, dass sie den Sicherheitsgurt von dem oberen Rand der Öffnung der Fahrzeugsäulenwand trennt.

7. Anordnung nach Anspruch 5 oder 6,
**dadurch gekennzeichnet, dass**
die Ablenkrinne im Querschnitt u-förmig ist.

8. Anordnung nach einem der voranstehenden Ansprüche, **dadurch gekennzeichnet, dass**
der obere Rand (190) der Öffnung der Fahrzeugsäulenwand in Richtung Fahrzeuginnenraum umgebogen ist.

9. Anordnung nach einem der voranstehenden Ansprüche, **dadurch gekennzeichnet, dass**
die Fahrzeugsäulenwand im Bereich unterhalb der Öffnung eine Vertiefung, insbesondere eine rampenförmige Vertiefung (200), aufweist, die in Richtung Öffnung tiefer wird und den Sicherheitsgurt in Richtung Öffnung führt.

10. Anordnung nach einem der voranstehenden Ansprüche, **dadurch gekennzeichnet, dass**
der obere Rand der Öffnung der Fahrzeugsäulenwand und das Ablenkglied schräg zur Horizontalen verlaufen.

11. Anordnung nach einem der voranstehenden Ansprüche, **dadurch gekennzeichnet, dass**
die Gurtumlenkvorrichtung eine Befestigungsstelle (70), insbesondere in Form eines Lochs, eines Bolzens oder eines Gewindes (80), aufweist, die ein Befestigen, insbesondere Verschrauben, der Gurtumlenkvorrichtung an der Fahrzeugsäullenwand oder einer anderen Fahrzeugsäulenwand der Fahrzeugsäule durch ein Befestigungsmittel (160), insbesondere eine Schraube oder Mutter, ermöglicht.

## Claims

1. Arrangement with a vehicle pillar (120) and with a belt redirection device (10) for a seat belt (300),
- with a redirection member (30) which redirects the seat belt, and
- with a deflection member (40) which deflects the seat belt in the direction of the vehicle occupant,
**characterized**
- **in that** an inner vehicle pillar wall of the vehicle pillar (120) or a vehicle pillar wall of the vehicle pillar (120) directly adjacent to the vehicle interior has an opening (130) into which the belt redirection device is inserted in such a manner that the redirection member (20) lies on the outside (150) of the vehicle pillar wall, the outside facing away from the vehicle interior (190),
- **in that** the seat belt (300) is guided from the vehicle interior through the opening onto the outside of the vehicle pillar wall to the redirection member and from the latter to the deflection member, and
- **in that** the deflection member guides the seat belt through said opening again into the vehicle interior and, in the process, deflects the seat belt in the direction of the vehicle occupant.

2. Arrangement according to Claim 1,
**characterized in that**
the redirection member is arranged above the opening in the vehicle pillar wall, and the seat belt is redirected on the outside of the vehicle pillar wall above the opening.

3. Arrangement according to Claim 1 or 2, **characterized in that**
the opening in the vehicle pillar wall and the belt redirection device are arranged in such a manner that the seat belt, coming from below the opening, passes through the opening and passes upwards above the opening onto the outside of the vehicle pillar wall, is redirected downwards from there along the longitudinal direction of the vehicle pillar wall by the redirection member and passes to the upper edge (190) of the opening and is deflected in the region of the upper edge of the opening into the vehicle interior.

4. Arrangement according to one of the preceding claims,
**characterized in that**
the deflection member (100) engages around an upper edge (190) of the opening in the vehicle pillar wall.

5. Arrangement according to one of the preceding claims,
**characterized in that**
the deflection member is formed by a channel-shaped deflection channel (110) which, coming from the outside of the vehicle pillar wall, engages around the upper edge (190) of the opening (130) in the vehicle pillar wall.

6. Arrangement according to Claim 5,
**characterized in that**
the deflection channel is configured in such a manner that it separates the seat belt from the upper edge of the opening in the vehicle pillar wall.

7. Arrangement according to Claim 5 or 6, **characterized in that**
the deflection channel is U-shaped in cross section.

8. Arrangement according to one of the preceding claims,
**characterized in that**
the upper edge (190) of the opening in the vehicle pillar wall is bent over in the direction of the vehicle interior.

9. Arrangement according to one of the preceding claims,
**characterized in that**
the vehicle pillar wall has a depression in the region below the opening, in particular a ramp-shaped depression (200), which gets lower in the direction of the opening and guides the seat belt in the direction of the opening.

10. Arrangement according to one of the preceding claims,
**characterized in that**
the upper edge of the opening in the vehicle pillar wall and the deflection member run obliquely with respect to the horizontal.

11. Arrangement according to one of the preceding claims,
**characterized in that**
the belt redirection device has a fastening point (70), in particular in the form of a hole, a bolt or a thread (80), permitting fastening, in particular screwing, of the belt redirection device to the vehicle pillar wall or to another vehicle pillar wall of the vehicle pillar by means of a fastening means (160), in particular a screw or nut.

## Revendications

1. Agencement comprenant une colonne de véhicule (120) et un dispositif de renvoi de sangle (10) pour une ceinture de sécurité (300), comprenant
- un organe de renvoi (20), qui renvoie la ceinture de sécurité, et
- un organe de déflexion (40), qui dévie la ceinture de sécurité dans la direction de l'occupant du véhicule,
**caractérisé en ce**
- **qu'**une paroi de colonne de véhicule de la colonne du véhicule (120) interne ou directement adjacente à l'habitacle du véhicule présente une ouverture (130) dans laquelle le dispositif de renvoi de sangle est inséré, de telle sorte que l'organe de renvoi (20) se situe du côté extérieur (150) de la paroi de colonne de véhicule opposé à l'habitacle du véhicule (140),
- **que** la ceinture de sécurité (300) est guidée depuis l'habitacle du véhicule à travers l'ouverture vers le côté extérieur de la paroi de colonne de véhicule jusqu'à l'organe de renvoi et de celui-ci jusqu'à l'organe de déflexion, et
- **que** l'organe de déflexion guide la ceinture de sécurité à travers la même ouverture à nouveau dans l'habitacle du véhicule et dévie en l'occurrence la ceinture de sécurité dans la direction de l'occupant du véhicule.

2. Agencement selon la revendication 1,
**caractérisé en ce que**
l'organe de renvoi est disposé au-dessus de l'ouverture de la paroi de colonne de véhicule et le renvoi de la ceinture de sécurité s'effectue du côté extérieur de la paroi de colonne de véhicule au-dessus de l'ouverture.

3. Agencement selon la revendication 1 ou 2, **caractérisé en ce que**
l'ouverture de la paroi de colonne de véhicule et le dispositif de renvoi de sangle sont disposés de telle sorte que la ceinture de sécurité provenant d'en dessous de l'ouverture traverse l'ouverture et parvienne vers le haut au-dessus de l'ouverture du côté extérieur de la paroi de colonne de véhicule, soit renvoyée de là par l'organe de renvoi le long de la direction longitudinale de la paroi de colonne de véhicule vers le bas et parvienne jusqu'au bord supérieur (190) de l'ouverture, et soit déviée dans la région du bord supérieur de l'ouverture dans l'habitacle du véhicule.

4. Agencement selon l'une quelconque des revendications précédentes,
**caractérisé en ce que**
l'organe de déflexion (100) vient en prise autour d'un bord supérieur (190) de l'ouverture de la paroi de colonne de véhicule.

5. Agencement selon l'une quelconque des revendications précédentes,
**caractérisé en ce que**
l'organe de déflexion est formé par une rigole de déflexion en forme de cannelure (110), qui vient en prise autour du bord supérieur (190) de l'ouverture (130) de la paroi de colonne de véhicule depuis le côté extérieur de la paroi de colonne de véhicule.

6. Agencement selon la revendication 5,
**caractérisé en ce que**
la rigole de déflexion est configurée de telle sorte qu'elle sépare la ceinture de sécurité du bord supérieur de l'ouverture de la paroi de colonne de véhicule.

7. Agencement selon la revendication 5 ou 6, **caractérisé en ce que**
la rigole de déflexion a une section transversale en forme de U.

8. Agencement selon l'une quelconque des revendications précédentes,
**caractérisé en ce que**
le bord supérieur (190) de l'ouverture de la paroi de colonne de véhicule est recourbé dans la direction de l'habitacle du véhicule.

9. Agencement selon l'une quelconque des revendications précédentes,
**caractérisé en ce que**
la paroi de colonne de véhicule présente, dans la région en dessous de l'ouverture, un renfoncement, notamment un renfoncement en forme de rampe (200), qui est plus profond dans la direction de l'ouverture et qui guide la ceinture de sécurité dans la direction de l'ouverture.

10. Agencement selon l'une quelconque des revendications précédentes,
**caractérisé en ce que**
le bord supérieur de l'ouverture de la paroi de colonne de véhicule et l'organe de déflexion s'étendent obliquement par rapport à l'horizontale.

11. Agencement selon l'une quelconque des revendications précédentes,
**caractérisé en ce que**
le dispositif de renvoi de sangle présente un point de fixation (70), notamment en forme de trou, de boulon ou de filetage (80), qui permet une fixation, notamment un vissage, du dispositif de renvoi de sangle à la paroi de colonne de véhicule ou à une autre paroi de colonne de véhicule de la colonne de véhicule par un moyen de fixation (160), notamment une vis ou un écrou.
